Europäisches Patentamt

European Patent Office

Office européen des brevets

(11) Numéro de publication: **0 421 828 A1**

# DEMANDE DE BREVET EUROPEEN

(21) Numéro de dépôt: 90402398.3

(22) Date de dépôt: 30.08.90

(51) Int. Cl.⁵: **G01B 7/06, G01B 7/10**

(30) Priorité: 13.09.89 FR 8911994

(43) Date de publication de la demande:
**10.04.91 Bulletin 91/15**

(84) Etats contractants désignés:
**AT BE CH DE DK ES GB GR IT LI LU NL SE**

(71) Demandeur: **INSTITUT DE RECHERCHES DE LA SIDERURGIE FRANCAISE (IRSID)**
**Immeuble Elysées-la-Défense 19, Le Parvis La Défense 4**
**F-92800 Puteaux(FR)**

(72) Inventeur: **Krausener, Gilbert**
**11, Place Allmacher**
**57050 Metz(FR)**
Inventeur: **Martin, Jean-Francois**
**254, avenue de la Libération**
**54000 Nancy(FR)**

(74) Mandataire: **Martin, Jean-Paul et al**
**c/o CABINET LAVOIX 2, Place d'Estienne d'Orves**
**F-75441 Paris Cedex 09(FR)**

(54) **Procédé pour déterminer en continu l'épaisseur du laitier liquide à la surface d'un bain en fusion dans un récipient métallurgique.**

(57) Selon ce procédé :
a) on détermine en continu la position en hauteur de l'interface (M) "métal fondu (2) - laitier liquide (3)",
b) on détermine en continu la position d'un isotherme (IS) situé à l'interface "laitier liquide (3) - couche de poudre (4)" en asservissant la position d'un thermocouple (8) sur cet isotherme et en mesurant les déplacements de ce thermocouple,
c) et par comparaison entre la position en hauteur de l'interface (M) métal fondu - laitier liquide et la position en hauteur de l'isotherme (IS), on déduit en continu l'épaisseur et donc les variations d'épaisseur du laitier liquide.

FIG.1

La présente invention a pour objet un procédé pour déterminer en continu l'épaisseur du laitier liquide à la surface d'un bain de métal en fusion dans un récipient métallurgique tel qu'une lingotière de coulée continue, dans le cas de coulée avec poudre de couverture.

Comme on le sait, l'intérêt de la détermination de l'épaisseur du laitier liquide est considérable : elle permet de juger de la qualité de la lubrification et surtout d'évaluer les risques d'entraînement d'inclusions de poudre de couverture dans la peau d'acier. Le risque d'entraînement de poudre est en effet très grand, lorsque l'épaisseur de laitier liquide sur le ménisque descend au-dessous de 2 ou 3mm.

A cette fin on a jusqu'à présent procédé manuellement par la méthode dite du "bifil", qui consiste à plonger un fil de cuivre et une tige d'acier dans le système acier-laitier. Le cuivre fond dans une zone proche de l'interface laitier liquide-laitier fritté tandis que l'acier fond à l'interface acier liquide-laitier liquide. On en déduit l'épaisseur de laitier liquide par mesure de la distance entre les extrémités du fil de cuivre et de la tige d'acier.

Il est rappelé que, lors de la coulée, le métal liquide est surmonté d'une couche de laitier liquide issu de la fusion de la poudre de couverture, qui est alimentée en continu dans la lingotière en cours de coulée. La poudre de couverture forme progressivement en s'échauffant une poudre frittée ou "laitier fritté", qui, en approchant du métal liquide, fond pour former la couche de laitier liquide.

Pour des brames, on plonge le dispositif bifil au milieu d'une demi-lingotière, entre la petite face et la busette, le nombre de mesures nécessaire étant de 20 à 25 par poche pour que les résultats soient significatifs. Le temps d'immersion est d'environ 2 secondes pour des brames à nuances classiques et peut atteindre 10 secondes pour certaines nuances.

Toutefois ces mesures ponctuelles et manuelles restent relativement imprécises et n'offrent pas de valeurs instantanées fiables et surtout continues.

L'invention a donc pour but de proposer un procédé permettant de mesurer en continu, avec précision et de manière automatique, l'épaisseur du laitier liquide au niveau du ménisque.

Suivant l'invention, on procède de la manière suivante :

a) on détermine en continu la position en hauteur de l'interface "métal fondu - laitier liquide",

b) on détermine en continu la position d'un isotherme situé à l'interface "laitier liquide - couche de poudre" en asservissant la position d'un thermocouple sur cet isotherme et en mesurant les déplacements de ce thermocouple,

c) et par comparaison entre la position en hauteur de l'interface métal fondu - laitier liquide et la position en hauteur de l'isotherme, on déduit en continu l'épaisseur et donc les variations d'épaisseur du laitier liquide.

La position en hauteur de l'interface entre l'acier liquide et le laitier liquide est déterminée, de manière connue en soi, par une bobine à courants de Foucault, disposée à distance au-dessus de la couche de poudre pulvérulente, ou par tout autre moyen équivalent.

Pour pouvoir déterminer l'épaisseur de laitier liquide, à partir de la mesure de la hauteur de l'interface métal fondu - laitier liquide, et de la mesure des déplacements du thermocouple, il suffit d'étalonner, préalablement à la coulée, les différents dispositifs de mesure par rapport à un niveau de référence, tel que par exemple le niveau prévu du métal liquide dans la lingotière.

En variante, l'épaisseur du laitier liquide peut être déterminée en cours de coulée. Elle peut être mesurée par exemple par un système bifil. On suit alors la variation de cette épaisseur par repérage de la variation de la position de l'isotherme grâce au thermocouple asservi à celui-ci, et des variations de hauteur de l'interface métal fondu - laitier liquide.

Le dispositif selon l'invention pour la mise en oeuvre de ce procédé comprend un système d'asservissement de la position d'un thermocouple sur l'isotherme situé à l'interface "laitier liquide - couche de poudre", des moyens de mesure du déplacement du thermocouple, un moyen de mesure des variations de la hauteur de l'interface "métal fondu - laitier liquide", par rapport à un repère préétabli, et des moyens de calcul en continu de l'épaisseur et donc des variations d'épaisseur du laitier liquide à partir des variations de la hauteur de l'interface "métal fondu -laitier liquide", et du déplacement du thermocouple.

D'autres particularités et avantages de l'invention apparaîtront au cours de la description qui va suivre, faite en référence aux dessins annexés qui en illustrent une forme de réalisation à titre d'exemple non limitatif.

La figure 1 est une vue schématique en coupe d'une lingotière contenant un bain d'acier liquide revêtu de laitier.

La figure 2 est un schéma de principe d'une forme de réalisation du procédé selon l'invention.

La figure 3 est une vue en élévation simplifiée d'une forme de réalisation industrielle du dispositif visé par l'invention.

La figure 4 est un diagramme illustrant un exemple numérique de variation de la position de l'isotherme laitier liquide - laitier solide en fonction du temps.

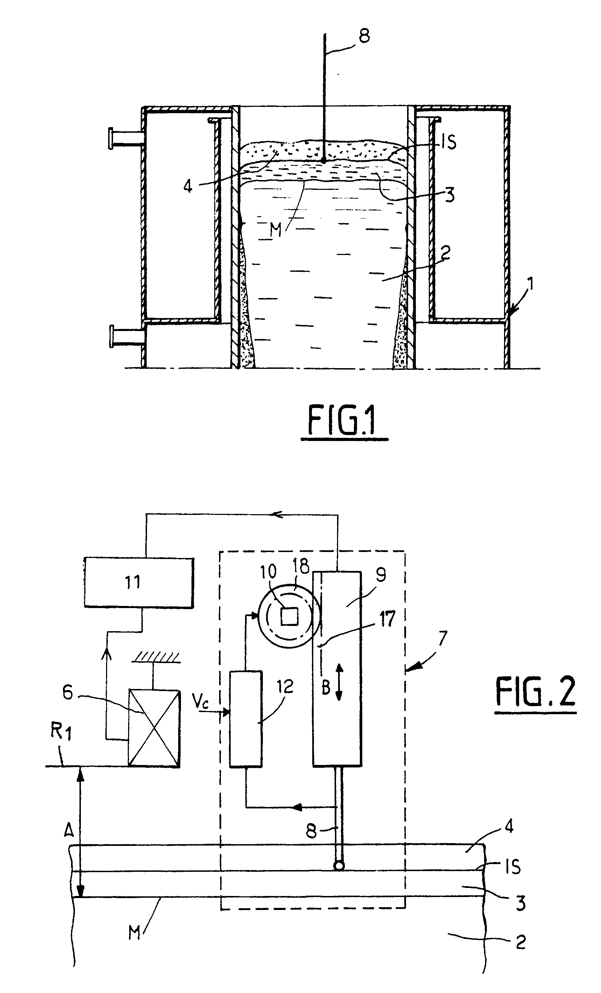

La lingotière 1 représentée à la Fig.1 contient l'acier liquide 2 surmonté successivement d'une couche de laitier liquide 3 et d'une couche de poudre 4, dont la fusion génère du laitier liquide à mesure de sa consommation pour les besoins de la coulée. Au plan de la thermique, ces couches sont séparées par des isothermes. L'isotherme IS qui intéresse tout spécialement l'invention est celui, généralement voisin de 1100° C, représentatif de la fusion de la poudre, et par conséquent situé à l'interface "Laitier liquide 3 - couche de poudre 4".

Pour déterminer en continu la variation d'épaisseur de la couche de laitier liquide 3, le dispositif visé par l'invention comprend, d'une part une bobine à courants de Foucault 6, disposée à faible distance au-dessus de la couche de poudre 4 en une position déterminée, repérable grâce au repère fixe R1. Cette bobine sert de capteur pour fournir une mesure A représentative de la position en hauteur de l'interface M métal liquide 2 - laitier liquide 3 (Fig.2). D'autre part, est également prévu un système d'asservissement 7 de la position de la tête d'un thermocouple 8 sur l'isotherme IS situé à l'interface laitier liquide 3 - couche de poudre 4. Le thermocouple 8 est porté par un support 9 pouvant être entraîné dans la direction verticale au-dessus de la lingotière 1, par un couple crémaillère 17 - pignon 18. Le pignon 18 est actionné en rotation par un moteur réversible 10 relié à un régulateur 12 asservi à une tension de consigne $V_c$ correspondant à la température de l'isotherme IS choisi. Au dispositif d'asservissement 7 sont également associés des moyens 11 de mesure, de calcul et de restitution des résultats, reliés au capteur 6 et à un capteur du déplacement du support 9 de thermocouple, tel qu'un codeur incrémental (non visible sur la Fig.2) monté en bout de l'arbre de rotation du moteur 10.

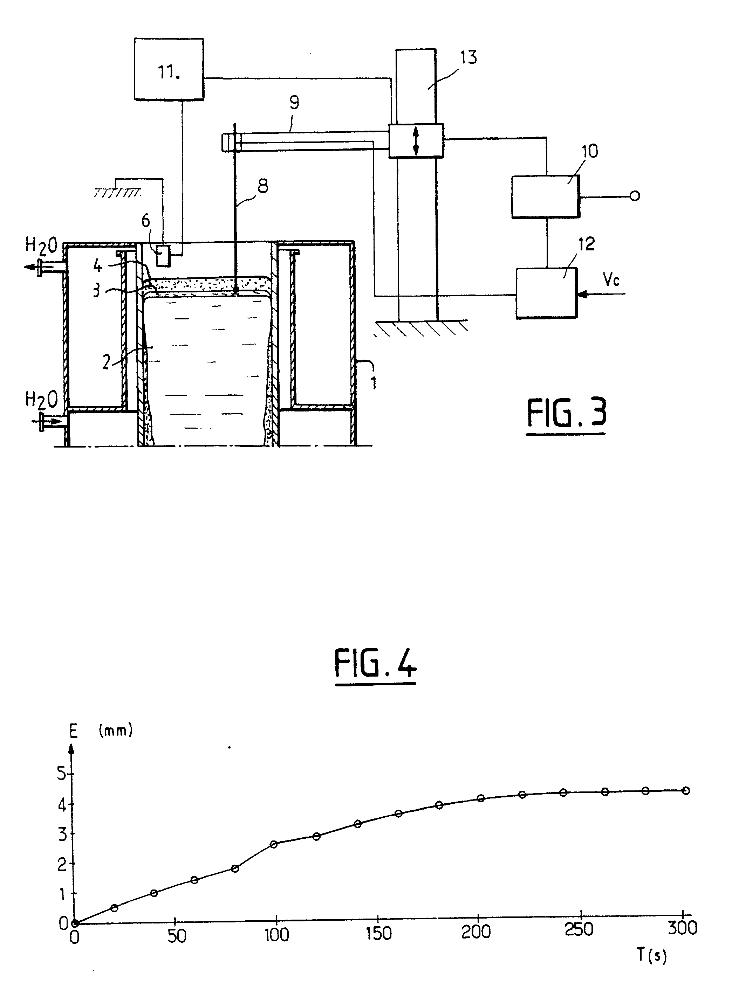

Dans la forme d'exécution illustrée à la Fig.3, le support 9 est un bras horizontal à une extrémité duquel est fixé le thermocouple 8, et dont l'autre extrémité est montée de manière coulissante et réglable sur un montant 13 disposé près de la lingotière 1.

Lorsque la température mesurée par le thermocouple 8 est différente de la température de l'isotherme IS (1100° C dans l'exemple décrit), la tension correspondante fournie au régulateur 12 est différente de la tension de consigne $V_c$. De ce fait, le régulateur 12 commande le moteur 10 dans un sens ou dans l'autre en fonction du signe de l'écart de température mesurée avec la température de consigne, afin de ramener la tête du thermocouple 8 exactement sur cet isotherme. Ainsi, lorsque la température mesurée est inférieure à la température de consigne, cela signifie que le niveau de l'isotherme a baissé, et en conséquence le régulateur 12 commande le moteur 10 dans le sens qui abaisse le thermocouple 8. Une manoeuvre inverse résulte d'une température mesurée supérieure à la température de consigne. Les moyens 11 calculent en continu le déplacement B du support 9 et la distance A du laitier liquide 3 à partir de la mesure.

A partir des mesures continues de A et B, les moyens de calcul 11 déterminent ensuite les variations de l'épaisseur du laitier liquide 3, et, si la position du thermocouple a été préalablement étalonnée par rapport au repère fixe R1, en déduisent en continu l'épaisseur du laitier liquide.

La mise en oeuvre du procédé conforme à l'invention par le dispositif qui vient d'être décrit découle directement de la description qui vient d'en être faite et s'effectue comme suit :

a) on mesure éventuellement, mais non nécessairement, au début l'épaisseur du laitier liquide 3, par un moyen connu tel que celui du bifil.

b) on mesure la hauteur A, on asservit le thermocouple 8 sur l'isotherme IS, et on détermine en continu l'épaisseur et/ou les variations d'épaisseur du laitier liquide 3 comme expliqué précédemment.

La Fig.4 est un diagramme obtenu par la mise en oeuvre du procédé et du dispositif selon l'invention, illustrant un exemple numérique montrant la variation de la hauteur de l'isotherme IS en fonction du temps par rapport au ménisque de métal liquide, c'est-à-dire l'épaisseur E du laitier liquide 3 juste après la mise en place de la poudre sur le bain de métal liquide. Dans cet exemple, on peut ainsi constater que l'épaisseur de laitier liquide se stabilise après une période de 200 à 250 secondes environ. On pourrait de même obtenir une variation accidentelle de cette épaisseur.

Par exemple, un abaissement anormal de l'isotherme IS correspond à une diminution anormale de l'épaisseur du laitier liquide 3. Pour y remédier, l'opérateur peut alors diminuer la vitesse de coulée du métal liquide, afin d'augmenter à nouveau l'épaisseur du laitier liquide 3, cette épaisseur étant directement liée à la quantité de laitier consommée et donc à la vitesse de coulée.

Les signaux de la bobine à courants de Foucault 6 sont très fiables à basse fréquence (de l'ordre de 100KHz) pour déterminer le niveau du ménisque M du métal liquide. Toutefois, on pourrait également utiliser d'autres moyens pour déterminer la position de l'interface M métal fondu - laitier liquide, tel qu'un dispositif d'asservissement similaire à celui précédemment décrit, mais fonctionnant avec un thermocouple asservi sur un isotherme proche du liquidus du métal coulé.

Il convient de noter que le procédé et le dispositif selon l'invention permettent de connaître en particulier les valeurs minimum et maximum de l'épaisseur du laitier liquide 3, même si cette épaisseur est perturbée par l'oscillation de la lingotière 1.

**Revendications**

1. Procédé pour déterminer en continu l'épaisseur du laitier liquide (3) à la surface d'un bain du métal en fusion (2) dans un récipient métallique, tel qu'une lingotière (1) de coulée continue, le laitier liquide (3) étant formé à partir d'une couche de poudre (4) qui le surmonte, caractérisé en ce que:

a) on détermine en continu la position en hauteur de l'interface (M) "métal fondu (2) - laitier liquide (3)",

b) on détermine en continu la position d'un isotherme (IS) situé à l'interface "laitier liquide (3) - couche de poudre (4)" en asservissant la position d'un thermocouple (8) sur cet isotherme et en mesurant les déplacements de ce thermocouple,

c) et par comparaison entre la position en hauteur de l'interface (M) métal fondu - laitier liquide et la position en hauteur de l'isotherme (IS), on déduit en continu l'épaisseur et donc les variations d'épaisseur du laitier liquide.

2. Procédé selon la revendication 1, caractérisé en ce que la position en hauteur de l'interface "métal fondu (2) - laitier liquide (3)" est déterminée par une bobine (6) à courants de Foucault disposée à distance, au-dessus de la couche de poudre (4).

3. Dispositif pour la mise en oeuvre du procédé selon l'une des revendications 1 ou 2, caractérisé en ce qu'il comprend un système d'asservissement (7) de la position d'un thermocouple (8) sur l'isotherme (IS) situé à l'interface "laitier liquide (3) -couche de poudre (4)", des moyens de mesure du déplacement du thermocouple (8), un moyen (6) de mesure des variations de la hauteur (A) de l'interface (M) "métal fondu (2) - laitier liquide (3)", par rapport à un repère ($R_1$) préétabli, et des moyens de calcul en continu de l'épaisseur et donc des variations d'épaisseur de laitier liquide à partir des variations de la hauteur (A) de l'interface "métal fondu - laitier liquide", et du déplacement du thermocouple.

4. Dispositif selon la revendication 3, caractérisé en ce que le système d'asservissement (7) comprend un thermocouple (8) porté par un support (9) dont la position au-dessus de la lingotière (1) est réglable au moyen d'un moteur réversible (10), commandé par un régulateur (12) asservi à une tension de consigne ($V_c$) correspondant à la température de l'isotherme (IS) visé:

**FIG.1**

**FIG.2**

FIG.3

FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 548 351   (NIPPON KOKAN KABUSHIKI KAISHA) <br> * page 3, lignes 21-38 * <br> — — —    · | 1-3 | G 01 B <br> 7/06 <br> G 01 B 7/10 |
| A | GB-A-2 083 227   (KOBE STEEL LTD.) <br> * revendications 1-7 * <br> — — — | 1 | |
| A | GB-A-2 138 145   (NIPPON KOKAN KABUSHIKI KAISHA) <br> * page 2 * <br> — — — | 2-4 | |
| A | PATENT ABSTRACTS OF JAPAN vol. 11, no. 42 <br> (P-545)(2489), 6 février 1987; <br> & JP - A - 61212702 (NIPPON KOKAN K.K.) 20.09.1986 <br> — — — — — | 1 | |

**DOMAINES TECHNIQUES
RECHERCHES (Int. Cl.5)**

B 22 D 11/00
G 01 B 7/00
G
01 B 21/00

Le présent rapport de recherche a été établi pour toutes les revendications

| Lieu de la recherche | Date d'achèvement de la recherche | Examinateur |
|---|---|---|
| Berlin | 10 décembre 90 | DIETRICH A. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire
T : théorie ou principe à la base de l'invention

E : document de brevet antérieur, mais publié à la
    date de dépôt ou après cette date
D : cité dans la demande
L : cité pour d'autres raisons

    ...........................................................................

& : membre de la même famille, document
    correspondant